(19) Europäisches Patentamt
European Patent Office
Office européen des brevets

(11) Publication number: 0 174 761 B1

(12) EUROPEAN PATENT SPECIFICATION

(45) Date of publication of patent specification: 21.09.88

(51) Int. Cl.[4]: C 07 C 95/08, C 08 G 65/32

(21) Application number: 85306018.4

(22) Date of filing: 23.08.85

# (54) P-formyl-N,N-dipolyoxyalkylene-substituted anilines and their preparation.

(30) Priority: 27.08.84 US 644375

(43) Date of publication of application: 19.03.86 Bulletin 86/12

(45) Publication of the grant of the patent: 21.09.88 Bulletin 88/38

(84) Designated Contracting States: AT BE CH DE FR GB IT LI LU NL SE

(56) References cited:
DE-C- 711 665
FR-A-2 085 111
US-A-3 855 210

(73) Proprietor: MILLIKEN RESEARCH CORPORATION
Iron Ore Road
Spartanburg South Carolina 29304 (US)

(72) Inventor: Moore, Patrick David
Route 10 Ferndale Drive
Spartanburg South Carolina 29303 (US)
Inventor: Mahaffey, Robert Linn
220 Oakmont Drive
Inman South Carolina 29349 (US)

(74) Representative: Perry, Robert Edward et al
GILL JENNINGS & EVERY 53-64 Chancery Lane
London WC2A 1HN (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 174 761 B1

Courier Press, Leamington Spa, England.

**Description**

The present invention relates to N,N-disubstituted aminobenzaldehydes, more particularly to p-formyl-N,N-dipolyoxyalkylene-substituted anilines, and to a process for preparing such compounds.

N,N-disubstituted aminobenzaldehydes are generally well known. They have a fairly wide variety of applications including, for instance, their use as intermediates in the preparation of commercial styryl dyes; see "The Cyanine Dyes and Related Compounds", Hamer (1964), Interscience Publishers (John Wiley & Sons, New York, USA). Bis(hydroxyalkyl)aminobenzaldehydes and some corresponding styryl dyes are disclosed in, for instance, US—A—3888668 and US—A—3855210.

There are several known methods for preparing N,N-disubstituted aminobenzaldehydes in general. One known method involves the reaction of N,N-disubstituted aniline and formaldehyde with a N,N-disubstituted p-nitrosonaline to form the corresponding Schiff base, followed by hydrolysis of the Schiff base with hot, dilute acid. The product may be separated by conventional filtration after the reaction mixture has been neutralised. The corresponding diamine remaining in the filtrate is normally discarded.

A second known method involves the reaction of phosphorus oxychloride ($POCl_3$) with dimethylformamide (DMF), followed by reaction with a N,N-disubstituted aniline, to form a N,N-disubstituted aminobenzaldehyde; see "Dyes and Their Intermediates", Abrahart (1977), Edward Arnold Ltd., London.

There are several disadvantages associated with the known methods for preparing N,N-disubstituted aminobenzaldehydes, when applied to the preparation of p-formyl-N,N-dipolyoxyalkylene-substituted anilines. In this case, the Schiff Base method can be applied in two ways. One way involves using N,N-dimethyl-p-nitrosoaniline to treat an N,N-dipolyoxyalkylene-aniline. Yields reported for this type of process are generally rather low, and the suspected human carcinogen p-amino-N,N-dimethylaniline is produced. In the other way, a N,N-dipolyoxyalkylene -aniline is nitrosylated and used to treat a N,N-dipolyoxyalkylene-aniline. The polymeric p-amino-N,N-dipolyoxyalkylene-aniline is produced in large quantities and is difficult to separate from the product, and is costly to dispose of.

In the second method described above, typically, a large excess of dimethylformamide is required in the reaction mixture to function as a solvent for the reactive $POCl_3$-DMF ionic complex which is formed during the reaction prior to the addition of the N,N-disubstituted aniline to that solution. There are, in addition, processing and apparatus difficulties because the reactor must be cooled and also be capable of stirring the small initial DMF/$POCl_3$ charge, while at the same time it must be capable of accommodating the entire charge, e.g. including N,N-disubstituted aniline. This last reactant (in the case of N,N-dipolyalkylene-substituted anilines) must be added in large volumes because of the stoichiometric requirements for the reaction and its greater molecular weight.

Novel compounds according to the present invention have the formula

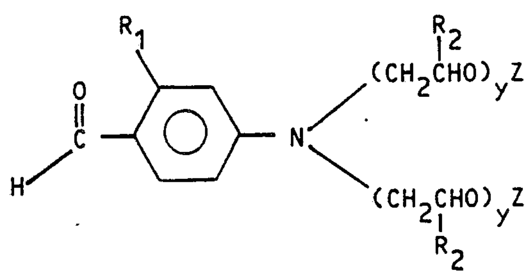

wherein $R_1$ is alkyl, alkoxy or a halogen atom; $R_2$ is H or alkyl; y is a number of from 2 from 200; and Z is H or alkylcarbonyl.

Surprisingly, owing to the solvent power of polyoxyalkylene present in the reactant, it is unnecessary to use DMF as a solvent.

According to a second aspect of the present invention, a process for the preparation of a p-formyl-N,N-dipolyoxyalkylene-substituted aniline comprises (a) adding a condensing agent to a solution of dimethylformamide in a N,N-dipolyoxyalkylene-substituted aniline diacetate, in which the condensing agent is selected from phosphorus oxychloride, thionyl chloride, phosphorus trihaldide, phosphorus pentahalide and acvl acid chlorides; and (b) hydrolysing the resultant p-formyl-N,N-dipolyoxyalkylene-substituted aniline diacetate.

The products of the process of the present invention may be generally described by reference to the given structural formula. $R_1$ is preferably methyl, ethyl, methoxy, ethoxy, chlorine, bromine or iodine. When alkyl, $R_1$ is preferably methyl. $R_2$ is preferably H or $C_{1-3}$ alkyl, e.g. methyl. Z is preferably H or ($C_{1-18}$ alkyl)carbonyl, e.g. ($C_{1-4}$ alkyl)carbonyl.

By way of general illustration of the process of the invention, a N,N-dipolyoxyalkylene-substituted aniline, unsubstituted in the para-position and sufficiently non-hindered by meta-substitution, e.g. unsubstituted or substituted by chlorine, methoxy or methyl, is mixed with DMF in an amount which is at least a molar equivalent with respect to the substituted aniline; a slight excess, e.g. 1.25 60 1.5 mole equivalent, is preferred, although a large excess may not be detrimental to product yield. The solution

which is formed may be cooled to 0 to 15C, for retention of best colour and to obtain the best yield, but the formylation reaction proceeds well without applied cooling. A molar excess (1.25 to 1.5) of phosphorus oxylchloride ($POCl_3$) or equivalent condensing agent is then added slowly to the solution. The condensing agent reacts first with DMF, forming the active formylating agent which, in the presence of the N,N-dipolyoxyalkylene-substituted aniline, reacts to introduce the incipient formyl group at the para-position. Most of the reaction occurs at temperatures of 0 to 15C over several hours, but heating to 90C promotes improved final yields.

Depending on the desired application, the product can be purified and treated in various ways. For example, neutralisation is accomplished by the addition of water and a suitable base such as sodium hydroxide. The products typically separate from the aqueous salt solution as oily liquids. Water-soluble products can be isolated by the use of a solvent such as methylene chloride.

Alternatively, and preferably, the N,N-dipolyoxyalkylene-substituted aniline is treated with acetic anhydride, to produce end groups terminating as acetyl esters. After formylation, the acetyl groups can be readily removed by alklaine hydrolysis, preferably with KOH or a KOH/NaOH mixture. Base is consumed during the reaction; at least 2 (and preferably 2.2) molar equivalents are used to effect complete hydrolysis. After hydrolysis, any excess base is neutralised with acid, mineral and/or acetic acid. The final product is purified by heating with an equal volume of water and separating the two liquid phases, product and salt solution. After repeated washing with water, the final product may be dehydrated by vacuum distillation of residual water.

The following Preparations and Examples illustrate the process and products of the invention. All parts are by weight.

Preparation A

6.04 parts N,N-polyoxyethylenepoloxypropyleneaniline (hydroxyl number = 105 mg/g KOH) were mixed with 0.00014 parts N-methylimidazole, purged with nitrogen and heated to 100C. 1.0 part acetic anhydride was then added dropwise over 30 minutes. The reaction was held for two hours at 109 to 116C, and then adapted for distillation. Vacuum was gradually applied to a maximum of 30 mm HG, and the pot temperature was raised to a maximum of 150C. 0.305 part acetic acid/anhydride and 6.35 parts N,N-polyoxyethylenepolyoxypropylene-aniline diacetate were obtained.

Preparation B

500 parts N,N-polyoxyethylenepoloxypropylene-m-methylaniline, produced from the reaction of an average of 7 moles ethylene oxide and 15 moles propylene oxide, were mixed with 0.1 part methylimidazole, and heated to 110C. 82.5 parts acetic anhydride were then added over 15 minutes. The reaction mixture was held at 95 to 116C for 3.75 hours. Acetic acid was then removed by vacuum distillation, to give 516 parts N,N-polyoxyethylenepolyoxypropylene-m-methylaniline diacetate.

Preparation C

250 parts N,N-polyoxyethylenepolyoxypropylene-m-chloroaniline, produced from the reaction of an average of 5 moles ethylene oxide and 8 moles propylene oxide, were mixed with 0.1 part 1-methylimidazole, and heated to 100C. 62 parts acetic anhydride were then added. The solution was held at 87 to 100C for about 3 hours. Acetic acid was then removed by vacuum distillation, to give 259 parts N,N-polyoxyethylenepolyoxypropylene-m-chloroaniline diacetate.

Preparation D

100 parts N,N-polyoxyethylene-m-methoxyaniline, produced from the reaction of an average of 12 moles ethylene oxide, were mixed with 0.1 part 1-methylimidazole, and heated to 80 to 90C. 35 parts acetic anhydride were added, and the solution was held for about 4 hours at 78 to 130C. Acetic acid was then removed under vacuum, to give 100 parts N,N-polyoxyethylene-m-methoxyaniline diacetate.

Prior Art Procedure

202 parts dimethylformamide were placed in a dry 3-neck flask, purged with nitrogen, and cooled to 0C. 84.9 parts phosphorus oxychloride were then added dropwise with stirring and cooling over 15 minutes. The solution was stirred for about 30 minutes at 0 to 2C. 500 parts of the N,N-polyoxyethylene-polyoxypropyleneaniline diacetate prepared by Preparation A were then added over 30 minutes. The reaction mixture was gradually heated to 90C, and then held at 90C for one hour. After cooling, the reaction mixture was diluted with an equal amount of ice, and then neutralised with 50% NaOH. The organic layer was separated and then washed three times with an equal amount of hot water. The product was dehydrated under reduced pressure to give 450 parts p-formyl-N,N-polyoxyethylenepolyoxypropylene-aniline diacetate (max. 342 nm; $A/_{gl}=20.45$).

428 parts of the diacetate were mixed with 200 parts water, and 41.0 g of the 85% KOH pellets were added. The mixture was heated to 80 to 90C for four hours, cooled and neutralised with HCl. The organic layer was separated and washed twice with equal amounts of hot water. Dehydration under reduced pressure gave 358 parts of the hydrolysed product (max. 342 nm; $A/_{gl}=21.1$).

Example 1

1000 parts N,N-polyoxyethylenepolyoxypropylene-aniline diacetate prepared by Preparation A and 234 parts dimethylformamide were mixed, purged with $N_2$, and cooled to 0 to 10C. 169 parts phosphorus oxychloride were then added slowly over 20 minutes with cooling.The mixture was stirred for one hour, gradually heated to 90C, and held at 90C for 2.5 hours.
The mixture was cooled, diluted with an equal amount of water and then neutralised with 50% sodium hydroxide. The organic layer was separated, washed twice with hot water, and dried under reduced vacuum to give 885 parts p-formyl-N,N-polyoxyethylenepolyoxypropylene-aniline diacetate (max. 342 nm; $A/_{gl}$=21.1). After hydrolysis using 94 parts 50% sodium hydroxide, 8.3 parts 85% potassium hydroxide and 319 parts water, at 90C, the product was isolated as described previously, to give 719 parts p-formyl-N,N-polyoxyethylenepolyoxypropylene-aniline (max. 342 nm; $A/_{gl}$=21.8).

Example 2

100 parts N,N-dipolyoxethylene-m-methoxyaniline diacetate prepared as in Preparation D were mixed with 28 parts dimethylformamide, and cooled to 8C. 35 parts phosphorus oxychloride were then added dropwise with cooling, to maintain a temperature less than 15C. The reaction was stirred for one hour, then heated to 50C over 30 minutes and to 90C over 50 minutes. The reaction mixture was cooled, diluted with an equal amount of water, and neutralised with 50% NaOH. 100 parts methylene chloride were added to dissolve the product. The methylene chloride was separated and washed with two additional equal volumes of water to give, after removal of solvents under vacuum, 82 parts p-formyl-N,N-dipolyoxyethylene-m-methoxyaniline diacetate ($A_{max/g/l}$=28.3).

Example 3

100 parts of N,N-polyoxyethylenepolyoxypropylene-m-methylaniline diacetate prepared as in Preparation B were mixed with 20 parts dimethylformamide, and cooled to 20C. 16.8 parts phosphorus oxychloride were then added dropwise over 10 minutes. The reaction was stirred for 30 minutes, then heated, held at 50C for 15 minutes, then heated and held at 90C for 15 minutes, then cooled, diluted with ice and water, and neutralised with 50% sodium hydroxide. The product, p-formyl-N,N-polyoxyethylene-polyoxypropylene-m-methylaniline diacetate, separated as an oil and was washed three times with equal amounts of water. $A_{max/g/l}$=19.5, 74 parts final yield.

Example 4

259 parts N,N-polyoxyethylenepolyoxypropylene-m-chloroaniline diacetate prepared as in Preparation C were mixed with 48 parts dimethylformamide, and cooled to 4C. 59.3 parts phosphorus oxychloride were then added over 30 minutes. The reaction was stirred for 30 minutes, heated and held at 50C for 45 minutes, and then heated and held at 90 to 94C for 2.5 hours. The product was cooled, diluted with ice and water, and then neutralised with 50% sodium hydroxide. The product separated as an oil and was washed three times with equal amounts of water to give 202 parts p-formyl-N,N-polyoxyethylenepolyoxypropylene-m-chloroaniline diacetate ($A_{max/g/l}$=22.8).

**Claims for the Contracting States: BE CH DE FR GB IT LU NL SE**

1. A compound of the formula

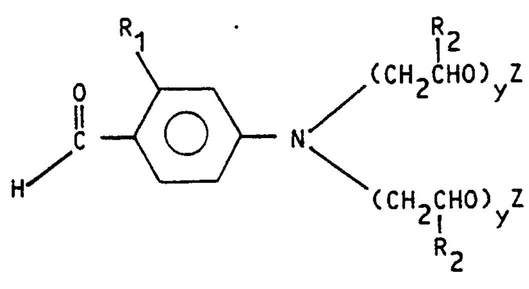

wherein $R_1$ is alkyl, alkoxy or a halogen atom; $R_2$ is H or alkyl; y is a number of from 2 to 200; and Z is H or alkylcarbonyl.

2. A compound of claim 1, wherein $R_1$ is methyl, ethyl, methoxy, ethoxy, chlorine, bromine or iodine.

3. A compound of claim 1 or claim 2, wherein $R_2$ is H, methyl or ethyl.

4. A compound of any preceding claim, wherein Z is H or ($C_{1-18}$ alkyl)carbonyl.

5. A process for the preparation of a p-formyl-N,N-dipolyoxyalkylene-substituted aniline, which comprises (a) adding a condensing agent to a solution of dimethylformamide in a N,N-dipolyoxyalkylene-substituted aniline, in which the condensing agent is selected from phosphorus oxychloride, thionyl chloride, phosphorus trihalides, phosphorus pentahalides and acyl acid chlorides; and (b) hydrolysing the resultant p-formyl-N,N-dipolyoxyalkylene-substituted aniline diacetate.

**Claims for the Contracting State: AT**

1. A process for the preparation of a p-formyl-N,N-dipolyoxyalkylene-substituted aniline, which comprises (a) adding a condensing agent to a solution of dimethylformamide in a N,N-dipolyoxyalkylene-substituted aniline, in which the condensing agent is selected from phosphorus oxychloride, thionyl chloride, phosphorus trihalides, phosphorus pentahalides and acyl acid chlorides; and (b) hydrolysing the resultant p-formyl-N,N-dipolyoxyalkylene-substituted aniline diacetate.

2. A process according to claim 1, wherein the product has the formula

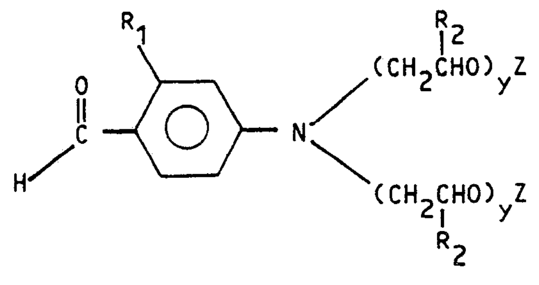

wherein $R_1$ is alkyl, alkoxy or a halogen atom; $R_2$ is H or alkyl; y is a number of from 2 to 200; and Z is H or alkylcarbonyl.

3. A process of claim 2, wherein $R_1$ is methyl, ethyl, methoxy, ethoxy, chlorine, bromine or iodine.

4. A process of claim 2 or claim 3, wherein $R_2$ is H, methyl or ethyl.

5. A process of any of claims 2 to 4, wherein Z is H or ($C_{1-18}$ alkyl)carbonyl.

**Patentansprüche für die Vertragsstaaten: BE CH DE FR GB IT LU NL SE**

1. Verbindung der Formel

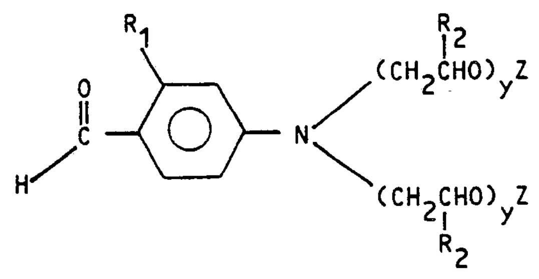

worin $R_1$ Alkyl, Alkoxy oder ein Halogenatom bedeutet; $R_2$ Wasserstoff oder Alkyl darstellt; y eine Zahl von 2 bis 200 bedeutet; und Z für Wasserstoff oder Alkylcarbonyl steht.

2. Verbindung nach Anspruch 1, worin $R_1$ Methyl, Ethyl, Methoxy, Ethoxy, Chlor, Brom, oder Jod bedeutet.

3. Verbindung nach Anspruch 1 oder 2, worin $R_2$ für Wasserstoff Methyl oder Ethyl steht.

4. Verbindung nach irgend einem vorstehenden Anspruch, worin Z für Wasserstoff oder ($C_{1-18}$Alkyl)carbonyl steht.

5. Verfahren zur Herstellung eines p-Formyl-N,N-dipolyoxyalkylen-substituierten Anilins, welches Verfahren

(a) eine Zugabe eines Kondensationsmittels zu einer Lösung von Dimethylformid in einem N,N-Dipolyoxyalkylen-substituierten Anilin, wobei das Kondensationsmittel ausgewählt ist unter Phosphoroxychlorid, Thionylchlorid, Phosphortrihalogeniden, Phosphorpentahalogeniden und Acylsäurechloriden; und

(b) ein Hydrolysieren des gebildeten p-Formyl-N,N-dipolyoxyalkylensubstituierten Anilindiacetats umfaßt.

**Patentansprüche für den Vertragsstaat: AT**

1. Verfahren zur Herstellung eines p-Formyl-N,-dipolyoxyalkylen-substituierten Anilins, welches Verfahren

(a) eine Zugabe eines Kondensationsmittels zu einer Lösung von Dimethylformid in einem N,N-Dipolyoxyalkylen-substituierten Anilin, wobei das Kondensationsmittel ausgewählt ist unter Phosphoroxychlorid, Thionylchlorid, Phosphortrihalogeniden, Phosphorpentahalogeniden und Acylsäurechloriden; und

(b) ein Hydrolysieren des gebildeten p-Formyl-N,N-dipolyoxyalkylensubstituierten Anilindiacetats umfaßt.

2. Verfahren nach Anspruch 1, worin das Produkt der Formel

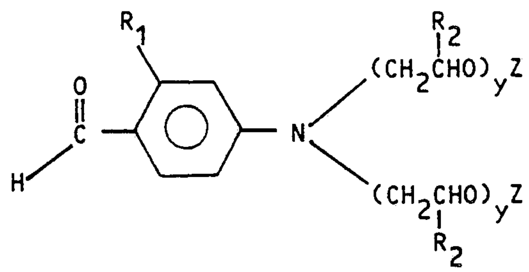

entspricht, worin $R_1$ Alkyl, Alkoxy oder ein Halogenatom bedeutet; $R_2$ Wasserstoff oder Alkyl steht; y eine Zahl von 2 bis 200 bedeutet; und Z für Wasserstoff oder Alkylcarbonyl steht.

3. Verfahren nach Anspruch 2, worin $R_1$ Methyl, Ethyl, Methoxy, Ethoxy, Chlor, Brom, oder Jod bedeutet.

4. Verfahren nach Anspruch 2 oder 3, worin $R_2$ für Wasserstoff Methyl oder Ethyl steht.

5. Verfahren nach einem der n Anspruch 2 bis 4, worin Z Wasserstoff oder ($C_{1-18}$Alkyl)carbonyl bedeutet.

**Revendications pour Etats Contractants: BE CH DE FR GB IT LU NL SE**

1. Un composé de formule

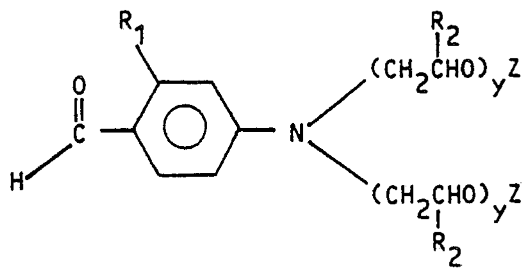

dans laquelle $R_1$ est un groupe alkyle, ou alcoxy ou un atome d'halogène; $R_2$ est H ou un groupe alkyle; y est un nombre de 2 à 200; et Z est H ou un groupe alkylcarbonyle.

2. Un composé selon la revendication 1, dans lequel $R_1$ est un groupe méthyle, éthyle, méthoxy, ou éthoxy ou un atome de chlore, de brome ou d'iode.

3. Un composé selon la revendication 1 ou 2, dans lequel $R_2$ est H ou un groupe méthyle ou éthyle.

4. Un composé selon l'une quelconque des revendications précédentes, dans lequel Z est H ou un groupe (alkyl en $C_1$—$C_{18}$)-carbonyle.

5. Un procédé pour la préparation d'une p-formylaniline N,N-dipolyoxyalkylénée, qui consiste (a) à ajouter un agent de condesation à une solution de diméthylformamide dans une aniline N,N-dipolyoxyalkylénée, l'agent de condensation étant choisi parmi l'oxychlorure de phosphore, le chlorure de thionyle, les trihalogénures de phosphore, les pentahalogénures de phosphore et les chlorures d'acyles; et (b) à hydrolyser le diacétate de p-formyl-aniline N,N-dipoloxyalkylénée résultant.

**Revendications pour Etat Contractant: AT**

1. Un procédé pour la préparation d'une p-formylaniline N,N-dipolyoxyalkylénée, qui consiste (a) à ajouter un agent de condensation à une solution de diméthylformamide dans un aniline N,N-dipolyoxyalkylénée, l'agent de condensation étant choisi parmi l'oxychlorure de phosphore, le chlorure de thionyle, les trihalogénures de phosphore, les pentahalogénures de phosphore et les chlorures d'acyles; et (b) à hydrolyser le diacétate de p-formyl-aniline N,N-dipolyoxyalkylénée résultant.

2. Un procédé selon la revendication 1, dans lequel le produit répond à la formule:

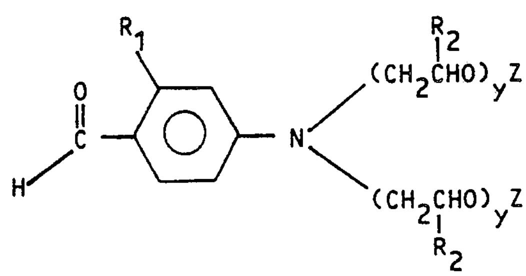

dans laquelle $R_1$ est un groupe alkyle, ou alcoxy ou un atome d'halogène; $R_2$ est H ou un groupe alkyle; y est un nombre de 2 à 200; et Z est H ou un groupe alkylcarbonyle.

3. Un procédé selon la revendication 2, dans lequel $R_1$ est un groupe méthyle, éthyle, méthoxy, ou éthoxy ou un atome de chlore, de brome ou d'iode.

4. Un procédé selon la revendication 2 ou 3, dans lequel $R_2$ est H ou un groupe méthyle ou éthyle.

5. Un procédé selon l'une quelconque des revendications 2 à 4, dans lequel Z est H ou un groupe (alkyl en $C_2$—$C_{18}$)-carbonyle.